Europäisches Patentamt

European Patent Office

Office européen des brevets

(19)

(11) Numéro de publication: **0 115 733**
**A1**

(12) # DEMANDE DE BREVET EUROPEEN

(21) Numéro de dépôt: **83402541.3**

(51) Int. Cl.³: **H 02 H 3/093**

(22) Date de dépôt: **27.12.83**

(30) Priorité: **30.12.82 FR 8222144**

(71) Demandeur: **PETERCEM S.A., 61, Route de Grenoble B.P. 320, F-69808 Saint Priest-Cédex (FR)**

(43) Date de publication de la demande: **15.08.84 Bulletin 84/33**

(72) Inventeur: **Macovschi, Mihaïl, 133, Cours Albert Thomas, F-69003 Lyon (FR)**

(84) Etats contractants désignés: **AT BE CH DE GB IT LI NL SE**

(74) Mandataire: **Laget, Jean-Loup et al, Cabinet Pierre Loyer 18, Rue de Mogador, F-75009 Paris (FR)**

(54) **Procédé de mesure en courant alternatif de l'intensité par rapport à l'intensité nominale, et circuit électronique correspondant.**

(57) Le circuit électronique de mesure de I/In comporte:

– un circuit (2) élaborant un signal de tension U à partir de l'intensité I du courant; une tension de référence Uref; deux comparateurs (3, 4) pour détecter les passages par zéro et Uref de la tension U; un compteur (8) pour compter un nombre (n) d'impulsions entre lesdits passages par zéro et Uref de la tension U, et une matrice de calcul (11) délivrant à partir du nombre (n) d'impulsions comptées, une valeur du rapport I/In de l'intensité à l'intensité nominale du courant.

- 1 -

Procédé de mesure en courant alternatif de l'intensité par rapport à l'intensité nominale, et circuit électronique correspondant.

L'invention concerne un procédé de mesure en courant alternatif de l'intensité par rapport à l'intensité nominale, et le circuit électronique correspondant.

Par exemple, les moteurs électriques sont conçus et réalisés pour fonctionner à une intensité nominale In définie, mais ils peuvent fonctionner pendant une durée plus ou moins longue, à une intensité supérieure à l'intensité nominale In. Cette durée de fonctionnement en surintensité est d'autant plus courte que l'intensité du courant est grande.

Usuellement, au lieu de mesurer l'intensité en valeur absolue, on mesure le rapport I/In de l'intensité à l'intensité nominale. Lors de périodes normales de fonctionnement, ce rapport est voisin de 1, ou inférieur à 1. Lors d'un fonctionnement en surintensité, ce rapport est plus grand, et il faut arrêter le moteur avant sa détérioration. Sa durée de fonctionnement en surintensité doit donc être calculée très vite en fonction du rapport I/In. Un moyen rapide de calculer cette durée est de faire effectuer le calcul par un micro-processeur. Mais, pour qu'un microprocesseur puisse jouer son rôle, il est nécessaire de l'alimenter en données sous forme numérique.

Il est connu d'effectuer des mesures en courant alternatif au moyen d'appareils linéaires, en effectuant une conversion analogique-numérique après une conversion alternatif-continu; il y a donc deux étapes dans la conversion alternatif-numérique.

Pour la conversion analogique-numérique d'un niveau continu, on part d'une tension de référence Uref grande, on crée un signal en dent de scie, et on effectue un comptage d'impulsions jusqu'à ce que le signal en dent de scie atteigne la tension de référence. On a alors compté un nombre d'impulsions Nref, qui est le nombre maximal d'impulsions acceptable. On prend ensuite une tension U qui correspond à l'amplitude ou à la valeur efficace du courant à mesurer, on crée le même signal en dent de scie et on refait le comptage d'impulsions.

Si N est le nombre d'impulsions comptées, on détermine la valeur de la tension U par l'égalité :

$$U \; / \; Uref \; : \; N \; / \; Nref$$

On en déduit la valeur de l'intensité du courant et on peut calculer, par rapport à l'intensité nominale In, le temps de fonctionnement autorisé en surintensité.

Dans les appareils linéaires connus, il ressort à l'évidence que l'intensité mesurée doit être inférieure à une valeur de référence correspondant à la capacité de comptage de l'appareil. Par mesure de sécurité, on s'efforce d'avoir une valeur de référence aussi grande que possible. La précision de la mesure étant directement liée à la valeur de l'intensité mesurée, cette précision est grande pour les surintensités fortes, et faible lorsque l'intensité est proche de sa valeur nominale.

Cependant, l'information utile pour les fortes valeurs de I n'est obtenue qu'après un temps de comptage long, ce qui ne va pas dans le sens de l'amélioration de la sécurité.

L'un des buts de l'invention est d'éviter les inconvénients des appareils connus en prévoyant la mesure de toutes les intensités, sans limitation à une valeur maximale de référence.

Un autre but de l'invention est de réaliser une mesure de

- 3 -                          0115733

l'intensité d'autant plus rapide que l'intensité est grande,
de façon à être en mesure d'arrêter le moteur dans un délai
d'autant plus bref que le risque de détérioration est plus
grand.

Un autre but encore de l'invention est de prévoir une précision de mesure d'autant plus grande que la valeur de l'intensité est proche de la valeur nominale.

La présente invention a pour objet un procédé de mesure directe en courant alternatif, de l'intensité par rapport à
l'intensité nominale dans les moteurs électriques, caractérisé
par les étapes suivantes :

- on définit une tension de référence Uref correspondant à une
fraction de l'intensité nominale In du moteur,

- on élabore un signal de tension U proportionnel à l'intensité instantanée du courant à mesurer,

- on assure un comptage d'impulsions pendant la durée où la
tension U varie de 0 à la tension de référence Uref,

- on applique le résultat n de comptage à une matrice de
calcul qui définit directement la valeur du rapport I/In en
fonction du nombre d'impulsions comptées.

Selon d'autres caractéristiques de l'invention :

- la matrice est indépendante,

- la matrice se trouve dans la mémoire morte du microprocesseur qui traite les informations I/In et temps.

L'invention a également pour objet un circuit électronique
pour la mise en oeuvre du procédé selon la revendication 1,
caractérisé en ce qu'il comporte :

- un circuit élaborant un signal de tension U à partir de
l'intensité I du courant,

- une tension de référence Uref,

- deux comparateurs pour détecter les passages par zéro et par Uref de la tension U,

- un compteur pour compter un nombre (n) d'impulsions entre lesdits passages par zéro et par Uref de la tension U,

- une matrice de calcul délivrant à partir du nombre (n) d'impulsions comptées, une valeur du rapport I/In de l'intensité à l'intensité nominale du courant.

Selon d'autres caractéristiques de l'invention :

- le circuit élaborant le signal de tension U est une bobine de Rogowsky,

- le circuit électronique comporte un oscillateur et un circuit logique à bascule et portes ;

- toute la partie logique du circuit électronique est représentée par un microprocesseur qui traite l'information.

D'autres caractéristiques de l'invention ressortent de la description suivante faite avec référence au dessin annexé sur lequel on peut voir :

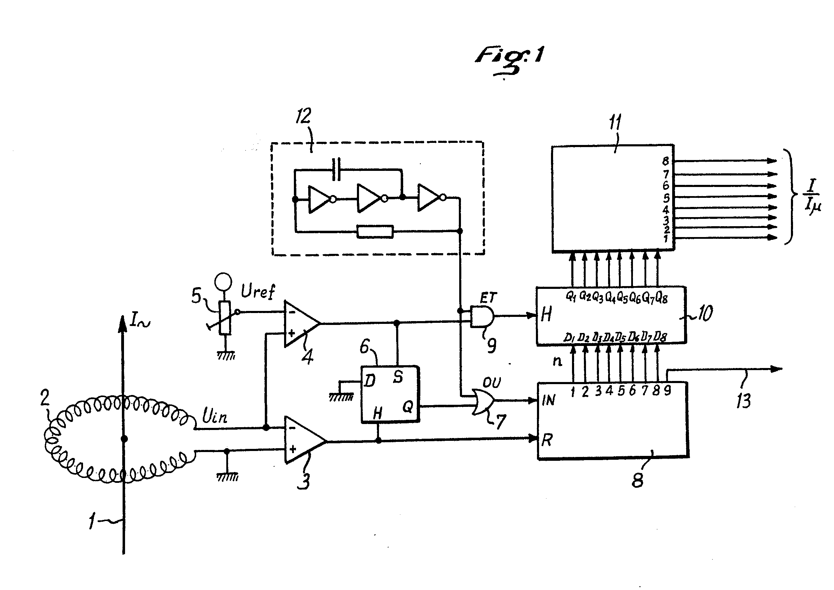

Figure 1 - un schéma symbolique simplifié d'un exemple de réalisation du circuit électronique selon l'invention, assurant la mesure de l'intensité d'une phase d'un moteur électrique triphasé.

Figure 2 - une représentation de différents signaux, en divers points du circuit de la figure 1.

Figure 3 - une variante simplifiée de réalisation utilisant un microprocesseur.

En se reportant au dessin, on peut voir qu'un circuit

- 5 -                                          0115733

électronique selon l'invention est prévu pour chaque phase d'un moteur triphasé. La phase contrôlée par le circuit est symbolisée par un conducteur 1 dans lequel circule un courant alternatif d'intensité I, à la fréquence du réseau, c'est-à-dire 50Hz en France, et 60Hz aux Etats-Unis, par exemple.

Pour mesurer ce courant, on utilise par exemple une bobine de Rogowsky 2, qui donne un signal de tension $U_{in}$ proportionnel à I. Ce signal $U_{in}$ est appliqué à l'entrée négative d'un premier comparateur 3, dont l'entrée positive est reliée à la masse et à l'une des bornes de la bobine 2. Il est également appliqué à l'entrée positive d'un deuxième comparateur 4 dont l'entrée négative reçoit un signal réglable de tension de référence Uref, en provenance d'un potentiomètre 5 par exemple.

Les sorties des deux comparateurs 3 et 4 sont respectivement reliées aux entrées H et S d'une bascule de type D, 6, dont l'entrée D est reliée à la masse, et dont la sortie Q, par l'intermédiaire d'une porte OU, 7 est reliée à l'entrée IN d'un compteur binaire 8 à 9 bits. La sortie du premier comparateur 3 est aussi reliée à l'entrée R de blocage à zéro du compteur 8. La sortie du deuxième comparateur 4 est également reliée par l'intermédiaire d'une porte ET, 9, à l'entrée H d'une mémoire-tampon 10, constituée par exemple d'une série de 8 bascules D. Les entrées D1 à D8 de ces 8 bascules sont respectivement alimentées par les bits de rang 1 à 8 du compteur binaire 8. Les sorties Q1 à Q8 de ces 8 bascules sont reliées à 8 entrées d'une matrice de calcul 11. Cette matrice de calcul est par exemple une mémoire morte. Le signal d'entrée de la matrice 11 est considéré comme une adresse. Il correspond à un nombre n d'impulsions compté par le compteur binaire 8. La matrice de calcul 11 donne en sortie, des valeurs de rapport I/In, de l'intensité I du courant dans la phase 1 à l'intensité nominale In, en fonction du nombre n d'entrée.

Un oscillateur 12, dont la fréquence propre est par exemple 1000 fois celle du réseau, fournit des impulsions aux deux portes ET, 9 et OU,7.

Le fonctionnement du circuit électronique selon l'invention s'analyse de la manière suivante, en rappelant préalablement le fonctionnement de la bascule de type D : dans cette bascule, lorsqu'un front montant est appliqué à l'entrée H, l'état de l'entrée D est reproduit à la sortie Q, et lorsqu'un niveau "1" est appliqué à l'entrée S, la sortie Q est forcée à l'état "1".

L'oscillateur 12 délivre en permanence des impulsions, à la fréquence de 50 KHz, par exemple. Ces impulsions, transmises au compteur binaire 8 par la porte OU, 7, sont comptées sauf si l'état de la sortie Q de la bascule 6 est 1 (dans ce cas, le compteur 8 voit toujours un signal 1 et ne compte pas), ou bien le signal à l'entrée R du compteur 8 est 1 (dans ce cas, le compteur 8 reste à zéro).

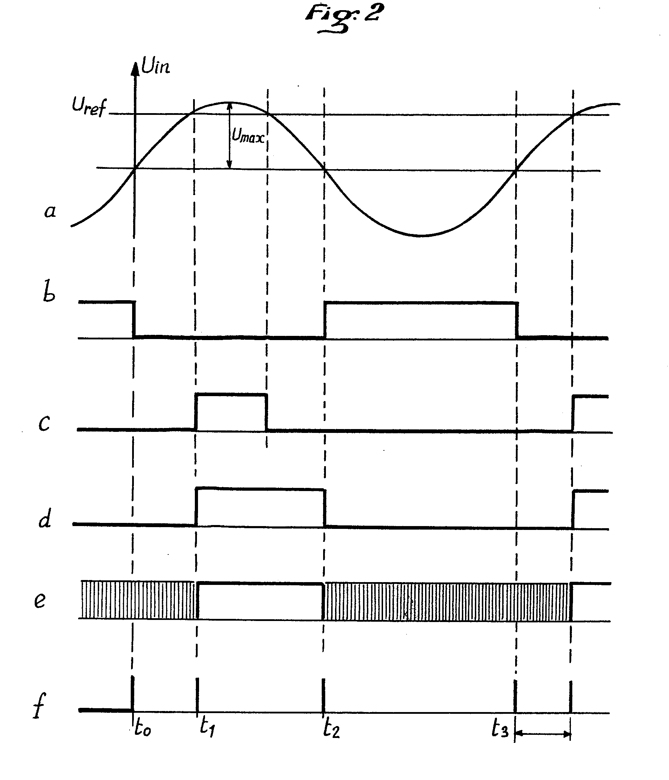

L'intensité dans le conducteur de phase 1 étant sinusoïdale, la bobine 2 délivre un signal de tension sinusoïdal Uin (figure 2, a). En général, ce signal dépasse la tension de référence Uref au cours de ses variations.

Le signal de sortie du comparateur 3 est représenté sur la ligne b de la figure 2 : il est égal à 1 ou 0, respectivement, lorsque la tension Uin délivrée par la bobine 2 est négative ou positive, respectivement. Le signal de sortie du comparateur 4, représenté sur la ligne c de la figure 2, est égal à 1 lorsque la tension Uin est supérieure à la tension de référence Uref, et à 0 dans le cas inverse.

Le signal à la sortie Q de la bascule 6 est représenté sur la ligne d de la figure 2. Ce signal devient égal à 1 lorsque l'entrée S reçoit un niveau "1" (figure 2, c), et devient égal à 0 lorsque l'entrée H reçoit un front montant (Figure 2, b).

La ligne e de la figure 2 représente les signaux reçus par l'entrée IN du compteur 8. Cette entrée ne peut procéder à aucun comptage lorsque la sortie Q de la bascule 6 est à l'état 1 (ligne d, figure 2).

Par ailleurs, le compteur 8 ne peut procéder à aucun comptage lorsque le signal sur son entrée R est à l'état 1 (ligne b, figure 2).

Enfin, la ligne f de la figure 2 permet de récapituler les étapes du fonctionnement :

- avant l'instant to, la tension Uin est négative, l'entrée R du compteur 8 est à l'état 1, et le compteur 8 est bloqué à zéro ;

- à l'instant to, la tension Uin devient positive, la sortie du comparateur 3 passe à l'état 0, l'entrée R du compteur 8 passe à l'état 0, et le compteur 8 compte les impulsions de l'oscillateur 12 arrivant par la porte OU 7;

- à l'instant t1, la tension Uin atteint la valeur de la tension de référence Uref. La sortie du comparateur 4 passe à l'état 1. La sortie Q de la bascule 6 passe à l'état 1 (front montant sur l'entrée S). L'entrée IN du compteur 8 recevant un signal 1 en permanence, arrête son comptage au nombre n d'impulsions déjà reçues depuis l'instant to. Par la porte ET, 9, l'entrée H de la mémoire-tampon 10 reçoit une impulsion qui fait transférer à la matrice de calcul 11 le nombre n d'impulsions déjà comptées, et la matrice 11 délivre en sortie un rapport I/In fonction de ce nombre n, afin d'assurer le contrôle du temps de fonctionnement du moteur en surintensité;

- à l'instant t2, la tension U devient négative , le comparateur 3 change d'état et le compteur est bloqué à l'état 0 jusqu'à la prochaine inversion de sens de la tension U à l'instant t3.

On peut remarquer que plus la surintensité est importante, plus vite la tension U dépasse la valeur de référence, plus court est le temps de comptage, et plutôt est transmis le signal de sortie de la matrice de calcul. Ce raccourcissement du délai de réaction par rapport aux appareils linéaires classiques va dans le sens de la sécurité. De plus quelle que

- 8 -

0115733

soit l'importance de la surintensité, on peut toujours donner
une valeur du rapport I/In.

Dans le cas où la tension Uin est inférieure à la tension de
référence, le comptage n'est pas interrompu avant le quart
de la période de la tension (figure 2, a).

Le neuvième bit du compteur passe alors à l'état 1 et donne
sur la sortie 13 un signal mettant en évidence un courant trop
faible.

La mesure de I/In est faite une fois par cycle du courant I lui-
même, et pour chaque phase. Les résultats peuvent être transmis
à un micro-processeur qui effectue le traitement approprié
pour déclencher un système de sécurité en vue de la protection
du moteur.

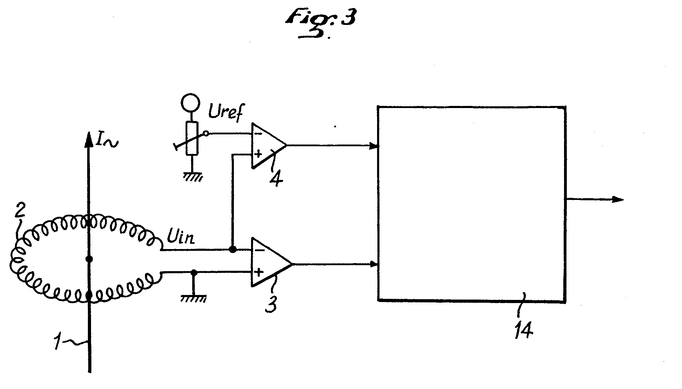

Toute la partie logique du schéma 1 peut être remplacée par
le micro-processeur 14 lui-même, comme dans la figure 3; dans
ce cas la simplification de l'électronique par rapport aux
systèmes connus est évidente.

Selon l'invention, la précision est très bonne au voisinage
de la valeur nominale de l'intensité. Cet avantage est appréciable car c'est dans ce voisinage que les temps de fonctionnement autorisés en surintensité diffèrent beaucoup et doivent
être bien connus. En revanche, pour les très fortes valeurs
de l'intensité, la précision est moins grande, mais l'invention permet un déclenchement plus rapide de la sécurité. Dans
un exemple particulier de réalisation de l'invention, la fréquence du courant à mesurer étant de 50Hz, et la fréquence de
l'oscillateur de 50KHz, on a défini une tension de référence
Uref qui correspond à une intensité moitié de l'intensité
nominale In. On a relevé les valeurs du rapport I/In, du rapport correspondant U/Uref, et les nombres n d'impulsions
comptées par le compteur binaire 8. Les résultats sont regroupés
dans le tableau suivant :

0115733

| I/In | U/Uref | n |
|------|--------|---|
| 0,5 | 1,0 | 250 |
| 0,6 | 1,2 | 157 |
| 0,8 | 1,6 | 107 |
| 1,0 | 2,0 | 83 |
| 1,1 | 2,2 | 75 |
| 1,2 | 2,4 | 68 |
| 1,5 | 3,0 | 54 |
| 2 | 4,0 | 40 |
| 3 | 6,0 | 27 |
| 5 | 10 | 16 |
| 10 | 20 | 8 |

Dans l'exemple décrit, on a mentionné une bobine de Rogowsky. On peut utiliser en variante un transformateur de courant et un convertisseur courant-tension, car il est nécessaire de disposer d'une tension alternative. L'avantage de la bobine de Rogowsky est qu'elle assure une parfaite linéarité de la mesure. Pour mesurer des courants faibles, et en conséquence, augmenter la sensibilité, on peut munir la bobine d'un tore en matériau magnétique, en ferrite par exemple.

Selon l'invention, on assure donc une conversion presque directe entre une intensité alternative et un rapport numérique I/In utilisable par un micro-processeur, sans passer par une conversion de courant alternatif en courant continu et sans échantillonnage, ce qui permet d'abaisser le coût de revient.

Dans la pratique, on peut placer la bobine 2 et les deux comparateurs 3 et 4 près du point de mesure, et disposer le reste du circuit électronique près du microprocesseur de traitement. On mesure avec précision des rapports I/In proches de l'unité, et on mesure des rapports I/In très grands et sans limitation théorique puisque par conception, on mesure des tensions supérieures à la tension de référence.

**0115733**

Revendications de brevet

1. - Procédé de mesure en courant alternatif, de l'intensité par rapport à l'intensité nominale, caractérisé par les étapes suivantes :

- on définit une tension de référence Uref correspondant à une fraction de l'intensité nominale In du moteur,

- on élabore un signal de tension U proportionnel à l'intensité du courant à contrôler,

- on assure un comptage d'impulsions pendant la durée où la tension U varie de 0 à la tension de référence Uref,

- on applique le résultat n du comptage à une matrice de calcul qui définit directement la valeur du rapport I/In en fonction du nombre d'impulsions comptées.

2. - Circuit électronique pour la mise en oeuvre du procédé selon la revendication 1, caractérisé en ce qu'il comporte :

- un circuit (2) élaborant un signal de tension U à partir de l'intensité I du courant,

- une tension de référence Uref,

- deux comparateurs (3, 4) pour détecter les passages par zéro et Uref de la tension U,

- un compteur (8) pour compter un nombre (n) d'impulsions entre lesdits passages par zéro et Uref de la tension U, et

- une matrice de calcul (11) délivrant à partir du nombre (n) d'impulsions comptées, une valeur du rapport I/In de l'intensité à l'intensité nominale du courant.

3. - Circuit selon la revendication 2, caractérisé en ce que le circuit (2) élaborant le signal de tension U est une bobine de Rogowsky.

4. - Circuit selon la revendication 2, caractérisé en ce qu'il comporte un oscillateur (12) et un circuit logique à bascule (6) et portes (7, 9).

5. - Circuit selon la revendication 2, caractérisé en ce que la matrice de calcul (11) est constituée par une mémoire morte.

6. - Circuit selon la revendication 2, caractérisé en ce que les fonctions du compteur (8) et de la matrice de calcul (11) sont remplies directement par un microprocesseur (14) qui traite l'information I/In.

Fig.1

## Fig. 2

*Fig. 3*

# 0115733

Office européen
des brevets

**RAPPORT DE RECHERCHE EUROPEENNE**

Numéro de la demande

EP 83 40 2541

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | FR-A-2 445 051 (GE) <br> * Revendication 1 * <br><br> --- | 1,2 | H 02 H 3/093 |
| A | DE-A-2 917 174 (TOKYO) <br> * Revendication 1 * <br><br> --- | 1,2 | |
| A | US-A-4 327 391 (CH. J. GRZEBIELSKI) <br> * Abrégé * <br><br> --- | | |
| A | US-A-4 000 446 (J.E. VANDEVIER) <br><br> * Revendication 1 * <br><br> ----- | | |

| DOMAINES TECHNIQUES RECHERCHES (Int. Cl. 3) |
|---|
| H 02 H |

Le présent rapport de recherche a été établi pour toutes les revendications

| Lieu de la recherche <br> LA HAYE | Date d'achèvement de la recherche <br> 21-03-1984 | Examinateur <br> MIELKE W |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

BAD ORIGINAL